# FASCICULE DE BREVET EUROPEEN

(11) **EP 1 957 506 B1**
(45) Date de publication et mention de la délivrance du brevet: **22.10.2014**
(21) Numéro de dépôt: 06818327.6
(22) Date de dépôt: 31.10.2006
(51) Int. Cl.: C07F 17/00, C08F 4/52, C08F 210/12

(54) **COMPLEXE METALLOCENE BOROHYDRURE D UN LANTHANIDE, SYSTEME CATALYTIQUE L INCORPORANT, PROCEDE DE POLYMERISATION L UTILISANT ET COPOLYMERE ETHYLENE/BUTADIENE OBTENU PAR CE PROCEDE**
BORHYDRID-METALLOCEN-KOMPLEX EINES LANTHANIDEN, KATALYTISCHES SYSTEM, DAS DIESEN KOMPLEX UMFASST, POLYMERISATIONSVERFAHREN, BEI DEM DIESER EINGESETZT WIRD, UND UNTER ANWENDUNG DIESES VERFAHRENS ERHALTENES ETHYLEN-BUTADIEN-COPOLYMER
BOROHYDRIDE METALLOCENE COMPLEX OF A LANTHANIDE, CATALYTIC SYSTEM INCLUDING SAID COMPLEX, POLYMERISATION METHOD USING SAME AND ETHYLENE/BUTADIENE COPOLYMER OBTAINED USING SAID METHOD

(30) Priorité: 09.11.2005 FR 0511416
(43) Date de publication de la demande: 20.08.2008
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH); Total Petrochemicals France, 92800 Puteaux (FR); Centre National de la Recherche Scientifique, 75794 Paris Cedex 16 (FR); Ecole Superieure de Chimie Physique Electronique de Lyon, 69616 Villeurbanne, Cedex (FR)
(72) Inventeur: THUILLIEZ, Julien, F-63100 Clermont-Ferrand (FR); BOISSON, Christophe, F-01390 Tramoyes (FR); SPITZ, Roger, F-69006 Lyon (FR)
(74) Mandataire: Le Cam, Véronique Marie Christine
(86) Numéro de dépôt international: PCT/EP2006/010452
(87) Numéro de publication internationale: WO 2007/054223

(56) Documents cités:
- EP-A1- 1 092 731
- WO-A1-2005/028526
- QIAN C ET AL: "The first example of a dinuclear anionic lanthanoidocene complex: [K(18-crown-6){(C13H8)CPh2(C5H4)Nd(BH4)2}] 2.C4H8O2" JOURNAL OF ORGANOMETALLIC CHEMISTRY, ELSEVIER-SEQUOIA S.A. LAUSANNE, CH, vol. 626, no. 1-2, 30 avril 2001 (2001-04-30), pages 171-175, XP004235659 ISSN: 0022-328X
- VISSEAUX M ET AL: "Synthesis and X-ray structure of a borohydro metallocene of neodynium and its use as pre-catalyst in Nd/Mg dual-component ethylene and isoprene polymerisations" JOURNAL OF ORGANOMETALLIC CHEMISTRY, ELSEVIER-SEQUOIA S.A. LAUSANNE, CH, vol. 691, 4 octobre 2005 (2005-10-04), pages 86-92, XP002393572 ISSN: 0022-328X
- DATABASE WPI DERWENT PUBLICATIONS LTD., LONDON, GB; 2001, XP002447599 Database accession no. 2001-398808
- KHVOSTOV A V ET AL: "Synthesis and structural study of the ate-complex rac-(CH3)2C(C5H3-3-Si(CH3)3)2Yb(mu2-Cl)2Li (OEt2)2 and the polymeric compound {rac-(CH3)2C(C5H3-3-Si(CH3)3)2Yb[(mu2-H)2B (mu2-H)2]2Li(THF)2}~" JOURNAL OF ORGANOMETALLIC CHEMISTRY, ELSEVIER-SEQUOIA S.A. LAUSANNE, CH, vol. 564, no. 1-2, 14 août 1998 (1998-08-14), pages 5-12, XP004146039 ISSN: 0022-328X
- QIAN C ET AL: "Synthesis of diphenylmethylene bridged fluorenyl cyclopentadienyl lanthanocene complexes with Cs symmetry and crystal structures of the ate complexes [Li(thf)4][LnCl2{(C13H8)CPh2(C5H4)}] and [Li(thf)4][Ln(BH4)2{(C13H8)CPh2(C5H4)}] (Ln = Nd or La)" JOURNAL OF THE CHEMICAL SOCIETY, DALTON TRANSACTIONS, CHEMICAL SOCIETY. LETCHWORTH, GB, 1999, pages 3283-3287, XP002393169 ISSN: 1472-7773
- BARBIER-BAUDRY D ET AL: "Non-hindered ansasamarocenes, versatile catalysts for diene/olefin/polar monomer copolymerisations. What is really the active species?" JOURNAL OF ORGANOMETALLIC CHEMISTRY, ELSEVIER-SEQUOIA S.A. LAUSANNE, CH, vol. 647, no. 1-2, 15 mars 2002 (2002-03-15), pages 167-179, XP004347237 ISSN: 0022-328X
- KHVOSTOV A V ET AL: "ansa-Ytterbocene(III) chloride and borohydride with a short bridge and bulky substituents: synthesis and crystal structures of [meso-(CH3)2Si[3-(CH3)3SiC5H3]2Yb(m2-Cl)]2 and meso-(CH3)2Si[3-(CH3)3SiC5H3]2Yb[(m2-H)3BH ](THF)", JOURNAL OF ORGANOMETALLIC CHEMISTRY, ELSEVIER-SEQUOIA S.A. LAUSANNE, CH, vol. 589, 1 January 1999 (1999-01-01), pages 222-225, XP002466011, ISSN: 0022-328X, DOI: 10.1016/J.JFLUCHEM.2004.10.011

## Description

La présente invention concerne un complexe métallocène borohydrure d'un lanthanide, son procédé de préparation, un système catalytique incorporant un complexe métallocène borohydrure d'un lanthanide, un procédé de polymérisation d'au moins une oléfine au moyen d'un tel système catalytique.

Pour la copolymérisation de l'éthylène et d'un diène conjugué, il est connu d'utiliser des systèmes catalytiques à base de complexes métallocènes halogénés de lanthanides.

Le document de brevet EP-A-1 092 731 enseigne d'utiliser, pour l'obtention de copolymères d'éthylène et d'un diène conjugué, un système catalytique comprenant :
- d'une part, un complexe organométallique représenté par l'une des formules génériques suivantes A ou B : 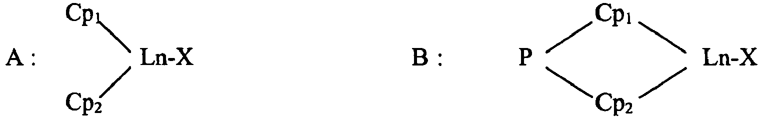 où Ln représente un métal d'un lanthanide dont le numéro atomique peut aller de 57 à 71,
   où X représente un halogène pouvant être le chlore, le fluor, le brome ou l'iode,
   où Cp₁ et Cp₂ comprennent chacun un, groupe cyclopentadiényle ou fluorényle qui est substitué ou non et où P est un pont répondant à la formule MR₁R₂, où M est un élément de la colonne IVA de la classification périodique de Mendeleev, et où R₁ et R₂ représentent un groupe alkyle comprenant de 1 à 20 atomes de carbone, et
- d'autre part, un co-catalyseur qui est choisi parmi un groupe comprenant un alkyl magnésium, un alkyl lithium, un alkyl aluminium, ou un réactif de Grignard, ou qui est constitué d'un mélange de ces constituants.

Le document de brevet WO-A-2004/035639 au nom des Demanderesses enseigne d'utiliser, pour l'obtention de copolymères d'éthylène et de butadiène, un système catalytique comprenant :
(i) un complexe métallocène de lanthanide représenté par l'une ou l'autre des formules suivantes : 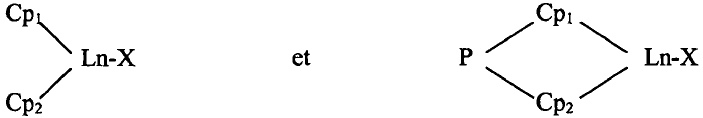
   où Ln représente un métal d'un lanthanide dont le numéro atomique peut aller de 57 à 71,
   où X représente un halogène pouvant être le chlore, le fluor, le brome ou l'iode,
   où, dans la première formule, sont reliées audit métal Ln deux molécules de ligands Cp₁ et Cp₂ identiques ou différentes, constituées chacune d'un groupe fluorényle qui est substitué ou non, et
   où, dans la seconde formule, est reliée audit métal Ln, une molécule de ligand constituée de deux groupes fluorényle Cp₁ et Cp₂ identiques ou différents qui sont substitués ou non et qui sont reliés entre eux par un pont P répondant à la formule Mir2, où M est un élément de la colonne IVA de la classification périodique de Mendeleev, et où R₁ et R₂ représentent un groupe alkyle comprenant de 1 à 20 atomes de carbone, et
(ii) un co-catalyseur appartenant au groupe constitué par un alkyl magnésium, un alkyl lithium, un alkyl aluminium, un réactif de Grignard, ou qui est constitué d'un mélange de ces constituants.

D'autres systèmes catalytiques à base de complexes mono-cyclopentadiényle de type borohydrure de lanthanide sont notamment connus dans la littérature pour l'homopolymérisation de dioléfines.

On peut par exemple citer l'article de D. Barbier-Baudry, O. Blacque, A. Hafid, A. Nyassi, H. Sitzmann, M. Visseaux, European Journal of Inorganic Chemistry 2000, 2333-2336, qui mentionne un complexe de formule (C₅H(*i*Pr)₄)Ln(BH₄)₂(THF) incluant un ligand mono-cyclopentadiényle substitué par un groupe iso-propyle (*i*Pr), où THF est le tétrahydrofuranne, pour l'homopolymérisation de l'isoprène ou du styrène après alkylation par un co-catalyseur de type organolithien.

Plus récemment, l'article de F. Bonnet, M. Visseaux, A. Pereira, D. Barbier-Baudry, Macromolecules 2005, 38, 3162-3169 a divulgué l'utilisation d'un complexe similaire de formule (C₅Me₄(*n*Pr))Nd(BH₄)₂(THF)₂ incluant un ligand mono-cyclopentadiényle penta-substitué, où *n*Pr est un groupe n-propyle, pour la polymérisation stéréospécifique 1,4-trans de l'isoprène après alkylation par un co-catalyseur de type dialkylmagnésien.

On peut également citer les travaux de M. Visseaux et al., Journal of Organometallic Chemistry, 691, (2006), pages 86-92, qui ont divulgué que le métallocène Cp*₂Nd(BH₄)(THF) lorsqu'il est utilisé en association avec du butyléthylmagnésium, même en présence d'un important excès de THF, constitue un catalyseur très actif de l'éthylène et en présence d'une quantité stoechiométrique de butyléthylmagnésium permettant la polymérisation stéréospécifique 1,4-trans de l'isoprène.

Le document de brevet chinois 1 286 256 divulgue, à titre de catalyseur de polymérisation pour la préparation de polyméthacrylates, un complexe métallocène borohydrure d'un lanthanide comportant une molécule de ligand constituée d'un groupe fluorényle répondant à la formule suivante :

{[(X₁)₂(R₇)(C₅R₁R₂R₃R₄)(C₁₃H₆R₅R₆)]MX₂(L)ₙ}ₘ,

où :
X₁ représente un groupe alkyle possédant de 1 à 4 C ou un groupe phényle,
X₂ = représente Cl, BH₄, H, un groupe alkyle possédant de 1 à 4 atome de carbone N[Si(CH₃)₃]₂, CH₂[Si(CH₃)₃] ou du tetrahydrofuranne,
R₁, R₃, R₄ représente H ou le radical CH₃,
R₂ représente H,
R₅, R₆ représentent H, un groupe alkyle possédant de 1 à 4 atomes de carbone ou Si(CH₃)₃,
R₇ représente Si, C, Ge ou Sn,
M représente un lanthanide, le yttrium ou le scandium,
L représente Si(CH₃)₃, Li(THF)₄, [éther couronne Y] ou [éther couronne Y]-2,4-époxy hexacycle,
n représente 0 ou 1 et m = 1 ou 2 (si m = 2, n = 0),
Y est un métal monovalent.

Une autre voie de recherche récente a concerné des complexes métallocènes borohydrures de lanthanides incluant un ligand à base de deux groupes cyclopentadiényle. On peut par exemple citer les travaux de S. M. Cendrowski-Guillaume et al., Organometallics 2000, 19,5654-5660 et Macromolecules 2003, 36, 54-60, qui ont divulgué l'utilisation d'un tel complexe métallocène, de formule (C₅Me₅)₂Sm(BH₄)(THF), où Me est un groupe méthyle et ou Sm est le samarium, pour catalyser spécifiquement la polymérisation de l'ε-caprolactone par ouverture de cycles.

A ce jour, la copolymérisation d'oléfines et de diènes conjugués à l'aide de complexes métallocènes borohydrures de lanthanides n'a pas été démontrée et reste un objectif à atteindre.

Un but de la présente invention est de remédier à cet inconvénient, et ce but est atteint en ce que les Demanderesses viennent de découvrir qu'un complexe métallocène borohydrure d'un lanthanide répondant à la formule B' 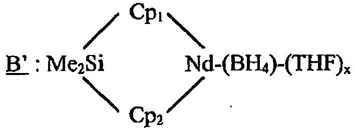 où Cp₁ et Cp₂ sont choisis parmi les groupes cyclopentadiényle, identiques ou différents, substitués ou non, et Cp₂ pouvant en outre représenter un groupe fluorényle, substitué ou non, qui sont dépourvus de métal alcalin, sont en association avec un co-catalyseur d'alkylation avantageusement utilisables en tant que catalyseur pour la polymérisation d'oléfines et, en particulier, pour la copolymérisation de mono-oléfines et de diènes conjugués et encore plus spécifiquement pour l'obtention, avec une bonne activité catalytique, de copolymères d'éthylène et de butadiène.

Avantageusement, dans ledit complexe, Cp₁ représente un groupe cyclopentadiényle, non substitué, de formule C₅H₄, et Cp₂ représente un groupe cyclopentadiényle, substitué par un groupe triméthylsilyle de formule C₅H₃(Si(CH₃)₃).

Ledit complexe nouveau selon l'invention est obtenu par un procédé de préparation comprenant la réaction d'un sel de ligand de formule P-Cp₁Cp₂-L₂,
dans laquelle P représente le pont de formule Me₂Si, Cp₁ et Cp₂ sont choisis parmi les groupes cyclopentadiényle, identiques ou différents, substitués par un groupe triméthylsilyle ou non, et Cp₂ pouvant en outre représenter un groupe fluorényle et L représente un métal alcalin choisi dans le groupe constitué par le lithium, le sodium et le potassium, et d'une solution de tris(borohydrure) de lanthanide dissous dans ledit solvant complexant et de formule Ln(BH₄)₃N₃, dans laquelle Ln représente le néodyme et N le THF (tétrahydrofuranne).

Selon un mode de réalisation de l'invention, ce procédé de préparation comprend le coulage à température ambiante dudit sel de ligand dissous dans un autre solvant, tel que l'éther diéthylique, sur ladite solution de tris(borohydrure) de lanthanide à l'état dissous dans cet autre solvant, l'agitation à température ambiante de la solution, la filtration de la solution agitée, la concentration du filtrat et/ou le séchage du produit, l'ajout éventuel d'un mauvais solvant au concentrat afin de faire précipiter le produit.

Avantageusement, ledit co-catalyseur est le butyloctyl magnésium.

La Demanderesse a découvert qu'un système catalytique à base d'un complexe métallocène répondant au formule B', permet avantageusement de copolymériser au moins deux oléfines, telles que des mono-oléfines et/ou des dioléfines, ce qui n'était pas connu dans l'art antérieur avec des systèmes catalytiques à base d'un complexe métallocène de type borohydrure de lanthanide.

Un autre aspect de l'invention concerne un procédé de copolymérisation selon l'invention d'au moins un monomère oléfinique, tel qu'une mono-oléfine avec au moins une dioléfine, qui comprend une réaction dudit système catalytique à base d'un complexe métallocène répondant au formule B', en présence desdits monomères et, de préférence, cette réaction est mise en oeuvre en suspension ou en solution, dans un solvant hydrocarboné, tel que le toluène, et à une température comprise entre -20° C et 120° C.

Cette réaction peut être réalisée sous une pression variable, de préférence allant de 1 bar à 50 bars et, également à titre préférentiel, à une température de préférence comprise entre 20° C et 90° C.

A titre préférentiel, le procédé de copolymérisation comprend :
(i) la préparation préalable dudit système catalytique hors du milieu de polymérisation en faisant réagir ledit complexe avec ledit co-catalyseur, puis
(ii) la réaction du système catalytique obtenu en (i) en présence des monomères à copolymériser.

En variante, on notera toutefois que le système catalytique pourrait être formé *in situ* dans le milieu de polymérisation.

Selon un exemple particulièrement avantageux de réalisation de l'invention, ce procédé comprend la copolymérisation de l'éthylène et du butadiène pour l'obtention d'un copolymère éthylène/ butadiène dans lequel :
- le taux molaire d'unités issues du butadiène est avantageusement supérieur à 24 % et, encore plus avantageusement, égal ou supérieur à 45 %, et dans lequel
- les unités issues du butadiène comprennent des enchaînements 1,2 (vinyliques) et très majoritairement 1,4 c'est-à-dire égal ou supérieur à 87 %.

Selon une caractéristique de l'invention, on utilise un rapport molaire (co-catalyseur /complexe) inférieur ou égal à 10, et avantageusement inférieur ou égal à 5.

Avantageusement, les copolymères selon l'invention présentent par ailleurs un indice de polymolécularité Ip qui est inférieur à 2,5 et, encore plus avantageusement, inférieur ou égal à 2,0. A l'instar des masses moléculaires Mn, les indices de polymolécularité Ip ont été déterminés dans la présente description par chromatographie d'exclusion stérique (voir l'annexe 1 jointe).

Les caractéristiques précitées de la présente invention, ainsi que d'autres, seront mieux comprises à la lecture de la description suivante de plusieurs exemples de réalisation de l'invention.

Pour tous les exemples suivants, on a opéré sous argon et on a préalablement séché les solvants utilisés par réaction avec du sodium suivie d'une distillation, ou bien sur un tamis moléculaire de 3 Å sous balayage d'argon.

On a analysé l'ensemble des complexes métallocènes synthétisés ci-après par RMN ¹H dans le THF-d8 à la température de 22°C, en utilisant un spectromètre « BRUKER DRX 300 » à la fréquence de 300 MHz.

On a déterminé la microstructure de chaque copolymère obtenu dans ces exemples par les techniques de RMN¹H et de RMN¹³C décrites à l'annexe 2 jointe. On a utilisé à cet effet un spectromètre de dénomination « BRUKER DRX 400 », à des fréquences de 400 MHz pour la technique de RMN¹H et de 100,6 MHz pour celle de RMN¹³C. L'acquisition des spectres a été effectuée à l'aide d'une sonde « QNP » de 5 mm à la température de 363 K. On a utilisé à titre de solvant un mélange tétrachloroéthylène/ perdeuterobenzène (rapport volumique 2:1).

### 1) Synthèse d'un complexe 1 de type métallocène borohydrure de lanthanide selon l'invention de formule brute [Me₂SiCpFluNd(BH₄)₂Li(THF)] (Cp = C₅H₄ ; Flu = C₁₃H₈)

a) On a synthétisé un sel de formule brute [Me₂SiCpFlu]Li₂(THF)₂ (Me, Cp et Flu étant respectivement un groupement méthyle, cyclopentadiényle et fluorényle).
   A cet effet on a synthétisé dans un premier temps un composé de formule [Me₂Si(C₅H₅)(C₁₃H₈)]. On a coulé à température ambiante une solution de [C₅H₅][Li] (0,98 g, 13,6 mmol) dans le THF (50 ml) sur une solution de Me₂Si(C₁₃H₉)Cl (1,76 g, 6,8 mmol) dans le THF (50 ml). La solution a été agitée pendant 4 heures, puis hydrolysée par une solution aqueuse saturée de chlorure d'ammonium (NH₄⁺,Cl⁻)ₛₐₜ. La phase organique a été lavée deux fois avec 30 ml de (NH₄⁺, Cl⁻)ₛₐₜ, puis séchée sur sulfate de magnésium. Le solvant a ensuite été évaporé et l'huile orange obtenue a été séchée sous vide pendant 8 heures. 1,82 g de [Me₂Si(C₅Hs)(C₁₃H₉)] ont ainsi été préparés (rendement = 93%).
   7,9 ml d'une solution de BuLi (1,6M, 12,6 mmol) ont été coulés à température ambiante sur une solution de Me₂Si(C₅H₅)(C₁₃H₉)] (1,82 g, 6,3 mmol) dans le THF (100 ml). Le mélange a été agité pendant 4 heures puis le solvant a été évaporé sous vide. Le résidu obtenu a été lavé trois fois avec 40 ml d'heptane à 0°C, puis séché sous vide. 2,41 g de sel dilithié ont ainsi été obtenus (rendement 86%).
   Le produit a été caractérisé par RMN du proton et sa formule brute est [Me₂SiCpFlu]Li₂(THF)₂ (M = 444,55 g.mol⁻¹). Les attributions sont :
   RMN¹H (pyridine-d5, 22°C): δ = 1,20 ppm (s, 6H, Si(CH₃)₂), 1,58 ppm (m, 8H, β-CH₂ du THF), 3,63 ppm (m, 8H, α-CH₂ du THF), 6,65 ppm (s, 2H, C₅H₄), 6,95 ppm (s, 2H, C₅H₄), 7,07 ppm (t, J_{H-H} = 8 Hz, 2H, C₁₃H₈), 7,31 ppm (t, J_{H-H} = 8 Hz, 2H, C₁₃H₈), 8,60 ppm (d, J_{H-H} = 8 Hz, 2H, C₁₃H₈), 8,70 ppm (d , J_{H-H} = 8 Hz, 2H, C₁₃H₈).
b) On a synthétisé par ailleurs le borohydrure de néodyme de formule Nd(BH₄)₃(THF)₃, comme décrit dans l'article de S. M. Cendrowski-Guillaume, G. Le Gland, M. Nierlich, M. Ephritikhine, Organometallics 2000, 19, 5654-5660.
c) On a alors synthétisé le composé 1 selon l'invention de la manière suivante :
   On a coulé à température ambiante une solution de sel [Me₂SiCpFlu]Li₂(THF)₂ (0,500 g, 1,1 mmol) dans le THF (50 ml) sur une solution de Nd(BH₄)₃(THF)₃ (0,456 g, 1,1 mmol) dans le THF (50 ml). Le mélange a été agité pendant 12 heures puis le solvant a été évaporé sous vide. Le résidu a été repris au toluène puis la suspension a été filtrée. Le solvant du filtrat a été évaporé, puis le résidu solide a été lavé avec deux fois 20 ml de pentane froid. Après séchage sous vide, 0,55 g de composé vert ont ainsi été obtenus.

Le produit a été caractérisé par RMN du proton.

La réaction a conduit au complexe 4 de néodyme selon l'invention de formule brute :

[Me₂SiCpFluNd(BH₄)₂Li(THF)] (M = 539,42 g.mol⁻¹).

Les signaux obtenus en RMN du proton dans le THF-d8 sont :

RMN ¹H (THF-d8, 22°C) : δ = -5,8 ppm (br, 2H, CH de C₅H₄ ou C₁₃H₈) ; -4,1 ppm (br, 2H, CH de C₅H₄ ou C₁₃H₈) ; -1,1 ppm (br, 2H, CH de C₅H₄ ou C₁₃H₈) ; 0,8 ppm (br, 2H, CH de C₅H₄ ou C₁₃H₈) ; 3,2 ppm (br, 2H, CH de C₅H₄ ou C₁₃H₈) ; 4,7 ppm (br, 6H, Si(CH₃)₂) ; 14 ppm (2H, br, CH de C₅H₄ ou C₁₃H₈) ; 73 ppm (vbr, 8H, Nd(BH₄)₂).
(br signifie signal large (pic étalé sur 1 à 5 ppm) et vbr signifie signal très large (pic étalé sur plus de 5 ppm)).

### 2) Synthèse d'un complexe 2 de type métallocène borohydrure de lanthanide selon l'invention de formule brute [Me₂Si(3-TMS-Cp) FluNd(BH₄)(THF)] (TMS = Si(CH₃)₃; Cp = C₅H₃; Flu = C₁₃H₈)

a) On a synthétisé le borohydrure de néodyme de formule Nd(BH₄)₃(THF)₃, comme décrit dans l'article de S. M. Cendrowski-Guillaume, G. Le Gland, M. Nierlich, M. Ephritikhine, Organometallics 2000, 19, 5654-5660.
b) On a ensuite synthétisé le composé 2 selon l'invention de la manière suivante :
   On a coulé à température ambiante une solution de [Me₃Si-C₅H₄][Li] (1,47 g, 10 mmol) dans le THF (20 ml) sur une solution de Me₂Si(C₁₃H₉)Cl (2,64 g, 10 mmol) dans le THF (50 ml). Le mélange a été agité pendant 4 heures, puis la solution a été refroidie à -20°C. 12,7 ml d'une solution de BuLi (1,6M, 20 mmol) ont alors été ajoutés. Le mélange a été ramené à température ambiante, puis agité pendant 12 heures.

La solution résultante, qui contient le sel dilithié de Me₂Si(3-TMS-C₅H₄)(C₁₃H₉), a ensuite été coulée à température ambiante sur une solution de Nd(BH₄)₃(THF)₃ (4,13 g, 10 mmol) dans le THF (50 ml). Le mélange a été maintenu sous agitation à température ambiante pendant 12 heures, puis le solvant a été évaporé sous vide. Le résidu a été repris avec du toluène (75 ml) et un sel blanc a été éliminé par filtration. Le solvant du filtrat a ensuite été évaporé. Le solide a été lavé trois fois avec du toluène à 0°C (40 ml). Après séchage sous vide, 2,60 g de produit se présentant sous la forme d'une poudre verte ont été obtenus.

Ainsi, la réaction a conduit au complexe 2, qui répond à la formule brute :

[Me₂Si(3-TMS-Cp)FluNd(BH₄)(THF)] (M = 589,75 g.mol⁻¹)

### 3) Synthèse d'un complexe 3 de type métallocène borohydrure de lanthanide selon l'invention de formule Me₂Si(3-TMS-Cp)₂Nd(BH₄)(THF)₂ (TMS = Si(CH₃)₃ ; Cp = C₅H₃)

a) On a synthétisé le borohydrure de néodyme de formule Nd(BH₄)₃(THF)₃, comme décrit dans l'article de S. M. Cendrowski-Guillaume, G. Le Gland, M. Nierlich, M. Ephritikhine, Organometallics 2000, 19, 5654-5660.
b) On a ensuite synthétisé le composé 3 selon l'invention de la manière suivante :
   On a coulé 12,4 ml d'une solution de BuLi (1,6M, 19,8 mmol) sur une solution de Me₂Si(3-TMS-Cp)₂ (3,29 g, 9,9 mmol) dans le THF (100 ml) refroidie à 0°C. Le mélange a été agité pendant 30 minutes à 5°C, puis 6 heures à température ambiante. Cette solution a ensuite été coulée sur une solution de Nd(BH₄)₃(THF)₃ (4,00 g, 9,9 mmol) dans le THF (100 ml). Le mélange a été agité à température ambiante pendant 12 heures, puis le THF a été évaporé sous vide. Le résidu a été repris au toluène (75 ml) et la suspension résultante a été filtrée. Le filtrat a été concentré, puis refroidi lentement jusqu'à la température de -20°C. Des cristaux bleus se sont formés (1,00 g).

Le produit a été analysé par RMN du proton. Ainsi, la réaction a conduit au complexe 3 de néodyme selon l'invention de formule brute :

[Me₂Si(3-TMS-Cp)₂Nd(BH₄)(THF)₂] (M = 634 g.mol⁻¹).

Les signaux obtenus en RMN du proton et leurs attributions sont :

RMN ¹H (pyridine-d5, 22°C) : δ = -14,39 ppm (br, C₅H₃); -12,65 ppm (br, C₅H₃) ; -12,31 ppm (br, C₅H₃) ; -11,34 ppm (br, C₅H₃) ; -2,80 ppm (s, Si(CH₃)₂ forme méso) ; -1,18 ppm (s, Si(CH₃)₂ forme racémique) ; 0,02 ppm (s, Si(CH₃)₂ forme méso) ; 1,59 et 3,63 ppm (s, 2*8H, 2*THF) ; 2,59 ppm (s, Si(CH₃)₃, forme racémique) ; 4,00 ppm (s, Si(CH₃)₃, forme méso) ; 14,14 ppm (br, C₅H₃) ; 20,24 ppm (br, C₅H₃) ; 49 ppm (vbr, 4H, Nd(BH₄)).
(br signifie signal large (pic étalé sur 1 à 5 ppm) et vbr signifie signal très large (pic étalé sur plus de 5 ppm)).

### 4) Essais de copolymérisation à basse pression avec les complexes 1 et 2

On a utilisé les complexes 1 et 2 en association avec du butyloctylmagnésium (« BOMAG » en abrégé) à titre de co-catalyseur d'alkylation, pour la copolymérisation de l'éthylène et du butadiène. On a préparé chaque système catalytique 1 ou 2 en procédant à une activation préalable du complexe 1 ou 2 par le co-catalyseur « BOMAG », selon un rapport molaire (co-catalyseur Mg / complexe Nd) égal à 5, la durée d'activation étant de 15 min. pour l'ensemble des essais 10-1 à 10-8.

Les polymérisations se sont déroulées dans un réacteur en verre de 250 ml, dans 200 ml de toluène à la température de 80°C et à une pression initiale de 4 bars. On a introduit les monomères dans le milieu sous la forme de mélanges gazeux comprenant de 20 % et 30 % de butadiène. Des essais où le mélange de monomères contient 50% et 75% de butadiène ont également été menés. Dans ces cas, l'alimentation en monomères a été effectuée en réalisant une dissolution à froid du butadiène dans la solution catalytique, suivie d'un ajout d'éthylène sous forme gazeuse. Le milieu est ensuite chauffé à la température de 80°C. Les quantités d'éthylène et de butadiène ont été déterminées de telle sorte que la pression initiale à 80°C soit proche de 4 bars.

Après un temps t (min.) de réaction, la polymérisation est stoppée par refroidissement et dégazage du réacteur, puis le copolymère est obtenu par précipitation dans du méthanol. Après séchage on obtient une masse m (g) de polymère.

**Tableau 1 : Conditions de polymérisation (complexes 1 et 2)**

| **Essais** | Complexe | Complexe en mg | [Nd] en µmol.L⁻¹ | [Mg] en µmol.L⁻¹ | %Bd alim. | Masse copolymère meng | Durée de polym. |
|---|---|---|---|---|---|---|---|
| **4-1** | 1 | 18,4 | 171 | 1 010 | 20 | 3,13 | 10 |
| **4-2** | 1 | 18,6 | 172 | 1 045 | 30 | 4,00 | 10 |
| **4-3** | 1 | 18,8 | 174 | 1 055 | 50 | 3,80 | 20 |
| **4-4** | 1 | 19,6 | 182 | 1 110 | 75 | 0,80 | 20 |
| **4-5** | 2 | 20,1 | 170 | 970 | 20 | 5,40 | 12 |
| **4-6** | 2 | 20,0 | 170 | 965 | 30 | 4,10 | 10 |
| **4-7** | 2 | 19,9 | 169 | 960 | 50 | 4,40 | 30 |
| **4-8** | 2 | 20,9 | 177 | 995 | 75 | 1,70 | 60 |
| **4-9** | 3 | 13,9 | 145 | 2900 | 5 | 3,3 | 92 |

**Tableau 2 : Activités des complexes 1 et 2 et macrostructure des copolymères**

| **Essais** | Activité en g.mol⁻¹.h⁻¹ | Activité en g.g⁻¹.h⁻¹ | Mn en g.mol⁻¹ | Ip |
|---|---|---|---|---|
| **4-1** | 458 800 | 850 | 4 450 | 2,01 |
| **4-2** | 696 50 | 1290 | 6 920 | 1,74 |
| **4-3** | 327 100 | 606 | 8 550 | 1,76 |
| **4-4** | 66 050 | 122 | 2 100 | 1,59 |
| **4-5** | 792 200 | 1 343 | 7 200 | 1,82 |
| **4-6** | 725 400 | 1 230 | 6 880 | 1,60 |
| **4-7** | 260 800 | 442 | 8 020 | 1,75 |
| **4-8** | 48 000 | 81 | 3 710 | 1,68 |
| **4-9** | 99 000 | 155 | 5 400 | 1,56 |

**Tableau 3 : Caractérisation par RMN ¹³C de la microstructure des copolymères.**

| **Essais** | % molaire unités Bd en alimentation | % molaire unités Bd dans copolymère | % mol. enchaînements 1,4 (dont trans) | % mol. enchaînements 1,2 |
|---|---|---|---|---|
| **4-1** | 20 | 29,2 | 97,1 (-) | 2,9 |
| **4-2** | 30 | 44,5 | 96,9 (98,8) | 3,1 |
| **4-3** | 50 | 49,1 | 95,8 (98,8) | 4,2 |
| **4-4** | 75 | 49,6 | 87,0 (-) | 13,0 |
| **4-5** | 20 | 24,5 | 97,6 (>99) | 2,4 |
| **4-6** | 30 | 39,0 | 96,9 (>99) | 3,1 |
| **4-7** | 50 | 45,2 | 95,9 (>99) | 4,1 |
| **4-8** | 75 | 47,2 | 89,7 (>99) | 10,3 |
| **4-9** | 5 | 9,4 | 97,1 | 2,9 |

Au vu du tableau 3, il apparaît que les complexes 1 et 2 selon l'invention permettent d'obtenir des copolymères éthylène/butadiène dans lesquels les unités issues du butadiène sont présentes selon un taux molaire supérieur à 15 %, voire 45 %, et comprennent toujours des enchaînements 1,4 selon un taux molaire très élevé, qui est égal ou supérieur à 87 %.

### ANNEXE 1 :

### Analyse par Chromatographie d'Exclusion Stérique des copolymères :

a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur « Waters 717 » et d'une pompe « Waters 515 HPLC » à un débit de 1 ml.min⁻¹ dans une série de colonnes « Polymer Laboratories ».
   Cette série de colonnes, placée dans une enceinte thermostatée à 45° C, est composée de :
   - 1 précolonne PL Gel 5 µm,
   - 2 colonnes PL Gel 5 µm Mixte C,
   - 1 colonne PL Gel 5 µm-500 Å.

   On a réalisé la détection à l'aide d'un réfractomètre « Waters 410 ».
   On a déterminé les masses molaires par calibration universelle en utilisant des étalons de polystyrène certifiés par « Polymer Laboratories » et une double détection avec réfractomètre et couplage au viscosimètre.
   Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polymolécularité calculé (Ip = Mw/Mn).
b) Pour les copolymères insolubles à température ambiante dans le tétrahydrofuranne, les masses molaires ont été déterminées dans le 1,2,4-trichlorobenzène. On les a tout d'abord dissous à chaud (4 h 00 à 150° C), puis on les a injectés à 150° C avec un débit de 1 ml.min⁻¹ dans un chromatographe « Waters Alliance GPCV 2000 » équipé de trois colonnes « Styragel » (2 colonnes « HT6E » et 1 colonne « HT2 »).

On a effectué la détection à l'aide d'un réfractomètre « Waters ».

On a déterminé les masses molaires par calibration relative en utilisant des étalons polystyrène certifiés par « Polymer Laboratories ».

## Revendications

1. Complexe métallocène borohydrure d'un lanthanide, **caractérisé en ce qu'**il répond à la formule B' : 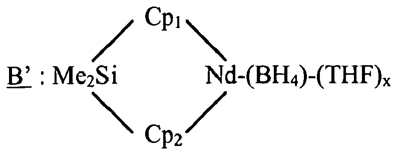 où Cp₁ et Cp₂ sont choisis parmi les groupes cyclopentadiényle, identiques ou différents, substitués par un groupe triméthylsilyle ou non, et Cp₂ pouvant en outre représenter un groupe fluorényle et x un nombre entier ou non supérieur à 0.

2. Procédé de préparation d'un complexe selon la revendications 1, **caractérisé en ce qu'**il comprend la réaction d'un sel de ligand de formule P-Cp₁Cp₂-L₂, dans laquelle P représente le pont de formule Me₂Si, Cp₁ et Cp₂ sont choisis parmi les groupes cyclopentadiényle, identiques ou différents, substitués par un groupe triméthylsilyle ou non, et Cp₂ pouvant en outre représenter un groupe fluorényle et L représente un métal alcalin choisi dans le groupe constitué par le lithium, le sodium et le potassium, et d'une solution de tris(borohydrure) de lanthanide dissous dans ledit solvant complexant et de formule Ln(BH₄)₃N₃, dans laquelle Ln représente le néodyme et N le THF (tétrahydrofuranne).

3. Procédé de préparation d'un complexe selon la revendication 2, **caractérisé en ce qu'**il comprend le coulage à température ambiante dudit sel de ligand dissous dans un autre solvant, tel que l'éther diéthylique, sur ladite solution de tris(borohydrure) de lanthanide à l'état dissous dans cet autre solvant.

4. Système catalytique utilisable pour la copolymérisation d'au moins deux oléfines, comprenant, d'une part, un complexe métallocène d'un lanthanide et, d'autre part, un co-catalyseur choisi dans le groupe constitué par un alkyl magnésium, un alkyl lithium, un réactif de Grignard et un mélange d'un alkyl lithium et d'un alkyl aluminium, **caractérisé en ce que** ledit complexe est un complexe métallocène borohydrure d'un lanthanide répondant à la formule suivante B' : 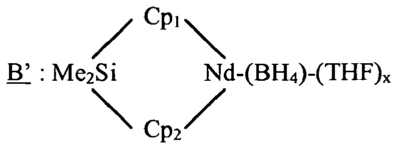 où Cp₁ et Cp₂ sont choisis parmi les groupes cyclopentadiényle, identiques ou différents, substitués par un groupe triméthylsilyle ou non, et Cp₂ pouvant en outre représenter un groupe fluorényle et x un nombre entier ou non supérieur à 0.

5. Système catalytique selon la revendication 4, **caractérisé en ce que** ledit co-catalyseur est le butyloctyl magnésium.

6. Procédé de copolymérisation d'au moins deux monomères oléfiniques, tel qu'une mono-oléfine et/ou une dioléfine, par réaction d'un système catalytique comprenant, d'une part, un complexe métallocène d'un lanthanide et, d'autre part, un co-catalyseur choisi dans le groupe constitué par un alkyl magnésium, un alkyl lithium, un réactif de Grignard et un mélange d'un alkyl lithium et d'un alkyl aluminium, **caractérisé en ce que** ledit complexe est un complexe métallocène borohydrure d'un lanthanide, répondant à la formule suivante B' : 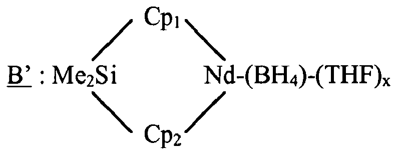 où Cp₁ et Cp₂ sont choisis parmi les groupes cyclopentadiényle, identiques ou différents, substitués par un groupe triméthylsilyle ou non, et Cp₂ pouvant en outre représenter un groupe fluorényle et x un nombre entier ou non supérieur à 0.

7. Procédé de copolymérisation selon la revendication 6, **caractérisé en ce que** Cp₁ et Cp₂ représentent chacun un groupe cyclopentadiényle substitué par un groupe triméthylsilyle.

8. Procédé selon la revendication 6, **caractérisé en ce que** Cp₂ représente un groupe fluorényle, non substitué, de formule C₁₃H₈ et Cp₁ représente un groupe cyclopentadiényle substitué par un groupe triméthylsilyle.

9. Procédé de copolymérisation selon la revendication 6, **caractérisé en ce qu'**il comprend la copolymérisation de l'éthylène et du butadiène et le co-catalyseur est le butyloctylmagnésium.

10. Procédé de copolymérisation selon la revendication 6, **caractérisé en ce que** le taux molaire d'unités issues du butadiène dans ledit copolymère est supérieur à 24 %.

11. Procédé selon la revendication 6, **caractérisé en ce que** le taux molaire d'unités issues du butadiène dans ledit copolymère est égal ou supérieur à 45 %.

12. Procédé de copolymérisation selon une des revendications 6 à 11, **caractérisé en ce que** le rapport molaire (co-catalyseur / complexe) est choisi égal à 10.

13. Procédé de copolymérisation selon la revendication 12, **caractérisé en ce que** le rapport molaire (co-catalyseur / complexe) est choisi égal à 5.

14. Procédé de copolymérisation selon une des revendications 6 à 13, **caractérisé en ce qu'**il comprend :
(i) la préparation préalable dudit système catalytique en faisant réagir ledit complexe avec ledit co-catalyseur, puis
(ii) une réaction en suspension ou en solution, dans un solvant hydrocarboné, tel que le toluène, et à une température comprise entre -20° C et 120° C, dudit système catalytique obtenu en (i) en présence desdits monomères à polymériser.

15. Complexe métallocène borohydrure Me₂SiCpFluNd(BH₄)₂Li(THF) où Cp représente C₅H₄ et Flu représente C₁₃H₈.

16. Système catalytique composé du complexe métallocène Me₂SiCpFluNd(BH₄)₂Li(THF) et du co-catalyseur butyloctylmagnésium où Cp représente C₅H₄ et Flu représente C₁₃H₈.

17. Procédé de copolymérisation de l'éthylène et du butadiène par réaction du complexe métallocène Me₂SiCpFluNd(BH₄)₂Li(THF) et du butyloctylmagnésium où Cp représente C₅H₄ et Flu représente C₁₃H₈.

## Patentansprüche

1. Borhydrid-Metallocen-Komplex eines Lanthanids, **dadurch gekennzeichnet, dass** er der folgenden Formel B' entspricht: 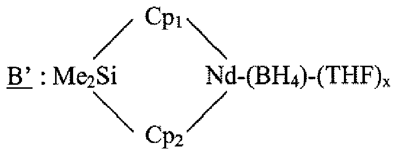 wobei Cp₁ und Cp₂ aus gleichen oder verschiedenen Cyclopentadienylgruppen, die gegebenenfalls durch eine Trimethylsilylgruppe substituiert sind, ausgewählt sind und Cp₂ außerdem für eine Fluorenylgruppe stehen kann und x für eine ganze oder gebrochene Zahl größer 0 steht.

2. Verfahren zur Herstellung eines Komplexes nach Anspruch 1, **dadurch gekennzeichnet, dass** man ein Ligandensalz der Formel P-Cp₁Cp₂-L₂, worin P für die Brücke der Formel Me₂Si steht, Cp₁ und Cp₂ aus gleichen oder verschiedenen Cyclopentadienylgruppen, die gegebenenfalls durch eine Trimethylsilylgruppe substituiert sind, ausgewählt sind und Cp₂ außerdem für eine Fluorenylgruppe stehen kann und L für ein Alkalimetall aus der Gruppe bestehend aus Lithium, Natrium und Kalium steht, und eine Lösung von Lanthanidtris(borhydrid) in dem komplexierenden Lösungsmittel und mit der Formel Ln(BH₄)₃N₃, worin Ln für Neodym steht und N für THF (Tetrahydrofuran) steht, zur Reaktion bringt.

3. Verfahren zur Herstellung eines Komplexes nach Anspruch 2, **dadurch gekennzeichnet, dass** man das in einem anderen Lösungsmittel, wie Diethylether, gelöste Ligandensalz bei Umgebungstemperatur zu der Lösung von Lanthanidtris(borhydrid) in der in diesem anderen Lösungsmittel gelösten Form gießt.

4. Katalytisches System, das zur Copolymerisation von mindestens zwei Olefinen verwendet werden kann und einerseits einen Metallocenkomplex eines Lanthanids und andererseits einen Cokatalysator, der aus der Gruppe bestehend aus einem Alkylmagnesium, einem Alkyllithium, einem Grignard-Reagens und einer Mischung eines Alkyllithiums und eines Alkylaluminiums ausgewählt ist, umfasst, **dadurch gekennzeichnet, dass** es sich bei dem Komplex um einen Borhydrid-Metallocen-Komplex eines Lanthanids handelt, der der folgenden Formel B' entspricht: 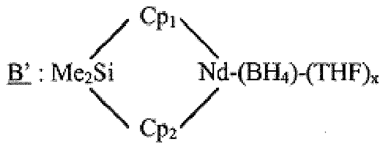 wobei Cp₁ und Cp₂ aus gleichen oder verschiedenen Cyclopentadienylgruppen, die gegebenenfalls durch eine Trimethylsilylgruppe substituiert sind, ausgewählt sind und Cp₂ außerdem für eine Fluorenylgruppe stehen kann und x für eine ganze oder gebrochene Zahl größer 0 steht.

5. Katalytisches System nach Anspruch 4, **dadurch gekennzeichnet, dass** es sich bei dem Cokatalysator um Butyloctylmagnesium handelt.

6. Verfahren zur Copolymerisation von mindestens zwei olefinischen Monomeren, wie einem Monoolefin und/oder einem Diolefin, durch Reaktion eines katalytischen Systems, das einerseits einen Metallocenkomplex eines Lanthanids und andererseits einen Cokatalysator, der aus der Gruppe bestehend aus einem Alkylmagnesium, einem Alkyllithium, einem Grignard-Reagens und einer Mischung eines Alkyllithiums und eines Alkylaluminiums ausgewählt ist, umfasst, **dadurch gekennzeichnet, dass** es sich bei dem Komplex um einen Borhydrid-Metallocen-Komplex eines Lanthanids handelt, der der folgenden Formel B' entspricht: 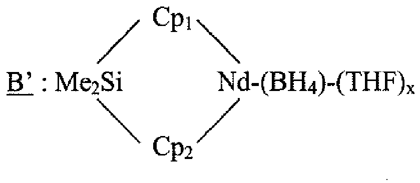 wobei Cp₁ und Cp₂ aus gleichen oder verschiedenen Cyclopentadienylgruppen, die gegebenenfalls durch eine Trimethylsilylgruppe substituiert sind, ausgewählt sind und Cp₂ außerdem für eine Fluorenylgruppe stehen kann und x für eine ganze oder gebrochene Zahl größer 0 steht.

7. Copolymerisationsverfahren nach Anspruch 6, **dadurch gekennzeichnet, dass** Cp₁ und Cp₂ jeweils für eine durch eine Trimethylsilylgruppe substituierte Cyclopentadienylgruppe stehen.

8. Verfahren nach Anspruch 6, **dadurch gekennzeichnet, dass** Cp₂ für eine unsubstituierte Fluorenylgruppe der Formel C₁₃H₈ steht und Cp₁ für eine durch eine Trimethylsilylgruppe substituierte Cyclopentadienylgruppe steht.

9. Copolymerisationsverfahren nach Anspruch 6, **dadurch gekennzeichnet, dass** es die Copolymerisation von Ethylen und Butadien umfasst und es sich bei dem Cokatalysator um Butyloctylmagnesium handelt.

10. Copolymerisationsverfahren nach Anspruch 6, **dadurch gekennzeichnet, dass** der molare Gehalt an sich aus Butadien ergebenden Einheiten in dem Copolymer über 24% liegt.

11. Verfahren nach Anspruch 6, **dadurch gekennzeichnet, dass** der molare Gehalt an sich aus Butadien ergebenden Einheiten in dem Copolymer größergleich 45% ist.

12. Copolymerisationsverfahren nach einem der Ansprüche 6 bis 11, **dadurch gekennzeichnet, dass** das Cokatalysator/Komplex-Molverhältnis gleich 10 gewählt wird.

13. Copolymerisationsverfahren nach Anspruch 12, **dadurch gekennzeichnet, dass** das Cokatalysator/Komplex-Molverhältnis gleich 5 gewählt wird.

14. Copolymerisationsverfahren nach einem der Ansprüche 6 bis 13, **dadurch gekennzeichnet, dass** man:
(i) vorher das katalytische System herstellt, indem man den Komplex mit dem Cokatalysator umsetzt, und dann
(ii) das in (i) erhaltene katalytische System in Suspension oder in Lösung in einem Kohlenwasserstoff-Lösungsmittel, wie Toluol, und bei einer Temperatur zwischen -20°C und 120°C in Gegenwart der zu polymerisierenden Monomere zur Reaktion bringt.

15. Borhydrid-Metallocen-Komplex
Me₂SiCpFluNd (BH₄)₂Li (THF), wobei Cp für C₅H₄ steht und Flu für C₁₃H₈ steht.

16. Katalytisches System, bestehend aus dem Metallocenkomplex Me₂SiCpFluNd(BH₄)₂Li(THF) und dem Cokatalysator Butyloctylmagnesium, wobei Cp für C₅H₄ steht und Flu für C₁₃H₈ steht.

17. Verfahren zur Copolymerisation von Ethylen und Butadien durch Reaktion des Metallocenkomplexes Me₂SiCpFluNd (BH₄) ₂Li (THF) und von Butyloctylmagnesium, wobei Cp für C₅H₄ steht und Flu für C₁₃H₈ steht.

## Claims

1. Borohydride metallocene complex of a lanthanide, **characterized in that** it corresponds to the formula B': 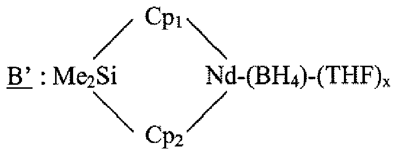 where Cp₁ and Cp₂ are chosen from identical or different cyclopentadienyl groups which are substituted by a trimethylsilyl group or unsubstituted, it being possible in addition for Cp₂ to represent a fluorenyl group, and x is an integral or non-integral number which is greater than 0.

2. Process for the preparation of a complex according to Claim 1, **characterized in that** it comprises the reaction of a ligand salt of formula P-Cp₁Cp₂-L₂, in which P represents the bridge of formula Me₂Si, Cp₁ and Cp₂ are chosen from identical or different cyclopentadienyl groups which are substituted by a trimethylsilyl group or unsubstituted, it being possible in addition for Cp₂ to represent a fluorenyl group, and L represents an alkali metal chosen from the group consisting of lithium, sodium and potassium, and of a solution of lanthanide Ln tris(borohydride) dissolved in the said complexing solvent and of formula Ln (BH₄)₃N₃ in which Ln represents neodymium and N represents THF (tetrahydrofuran).

3. Process for the preparation of a complex according to Claim 2, **characterized in that** it comprises running, at ambient temperature, the said ligand salt, dissolved in another solvent, such as diethyl ether, onto the said solution of lanthanide tris(borohydride) in the form dissolved in this other solvent.

4. Catalytic system which can be used for the copolymerization of at least two olefins, comprising, on the one hand, a metallocene complex of a lanthanide and, on the other hand, a cocatalyst chosen from the group consisting of an alkylmagnesium, an alkyllithium, a Grignard reagent and a mixture of an alkyllithium and of an alkylaluminium, **characterized in that** the said complex is a borohydride metallocene complex of a lanthanide corresponding to the following formula B': 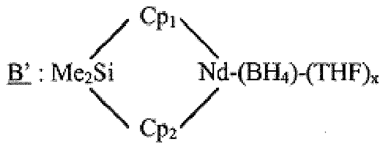 where Cp₁ and Cp₂ are chosen from identical or different cyclopentadienyl groups which are substituted by a trimethylsilyl group or unsubstituted, it being possible in addition for Cp₂ to represent a fluorenyl group, and x is an integral or non-integral number which is greater than 0.

5. Catalytic system according to Claim 4, **characterized in that** the said cocatalyst is butyloctylmagnesium.

6. Process for the copolymerization of at least two olefinic monomers, such as a monoolefin and/or a diolefin, by reaction of a catalytic system comprising, on the one hand, a metallocene complex of a lanthanide and, on the other hand, a cocatalyst chosen from the group consisting of an alkylmagnesium, an alkyllithium, a Grignard reagent and a mixture of an alkyllithium and of an alkylaluminium, **characterized in that** the said complex is a borohydride metallocene complex of a lanthanide corresponding to the following formula B': 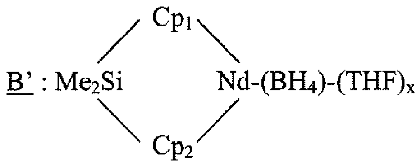 where Cp₁ and Cp₂ are chosen from identical or different cyclopentadienyl groups which are substituted by a trimethylsilyl group or unsubstituted, it being possible in addition for Cp₂ to represent a fluorenyl group, and x is an integral or non-integral number greater than 0.

7. Copolymerization process according to Claim 6, **characterized in that** Cp₁ and Cp₂, each representing a cyclopentadienyl group, are substituted by a trimethylsilyl group.

8. Process according to Claim 6, **characterized in that** Cp₂ represents an unsubstituted fluorenyl group of formula C₁₃H₈ and Cp₁ represents a cyclopentadienyl group substituted by a trimethylsilyl group.

9. Copolymerization process according to Claim 6, **characterized in that** it comprises the copolymerization of ethylene and butadiene and the cocatalyst is butyloctylmagnesium.

10. Copolymerization process according to Claim 6, **characterized in that** the molar level of units resulting from butadiene in the said copolymer is greater than 24%.

11. Process according to Claim 6, **characterized in that** the molar level of units resulting from butadiene in the said copolymer is equal to or greater than 45%.

12. Copolymerization process according to one of Claims 6 to 11, **characterized in that** the cocatalyst/complex molar ratio is chosen to be equal to 10.

13. Copolymerization process according to Claim 12, **characterized in that** the cocatalyst/complex molar ratio is chosen to be equal to 5.

14. Copolymerization process according to one of Claims 6 to 13, **characterized in that** it comprises:
(i) the preliminary preparation of the said catalytic system by reacting the said complex with the said cocatalyst, then
(ii) a reaction in suspension or in solution in a hydrocarbon solvent, such as toluene, and at a temperature of between -20°C and 120°C of the said catalytic system obtained in (i) in the presence of the said monomers to be polymerized.

15. Borohydride metallocene complex Me₂SiCpFluNd (BH₄) ₂Li (THF), where Cp represents C₅H₄ and Flu represents C₁₃H₈.

16. Catalytic system composed of the metallocene complex Me₂SiCpFluNd (BH₄) ₂Li (THF) and of the cocatalyst butyloctylmagnesium, where Cp represents C₅H₄ and Flu represents C₁₃H₈.

17. Process for the copolymerization of ethylene and butadiene by reaction of the metallocene complex Me₂SiCpFluNd (BH₄) ₂Li (THF) and butyloctylmagnesium, where Cp represents C₅H₄ and Flu represents C₁₃H₈.
